# FASCICULE DE BREVET EUROPEEN

(11) **EP 0 729 433 B1**
(45) Date de publication et mention de la délivrance du brevet: **10.06.1998**
(21) Numéro de dépôt: 95901490.3
(22) Date de dépôt: 15.11.1994
(51) Int. Cl.: B66F 3/36, B66F 3/46

(54) **DISPOSITIF POUR LA MANUTENTION D'UN CONTENEUR**
VORRICHTUNG ZUR HANDHABUNG EINES BEHÄLTERS
CONTAINER HANDLING DEVICE

(30) Priorité: 16.11.1993 FR 9313957
(43) Date de publication de la demande: 04.09.1996
(73) Titulaire: HYDRO 7 INTERNATIONAL, 42100 Saint Etienne (FR)
(72) Inventeur: SECONDI, Jean, Paul, F-42400 Saint-Chamond (FR)
(74) Mandataire: Perrier, Jean-Pierre
(86) Numéro de dépôt international: FR9401331
(87) Numéro de publication internationale: WO9513983

(56) Documents cités:
- WO-A-88/04276
- WO-A-93/21100
- DE-A- 3 537 640
- DE-U- 8 806 335
- FR-A- 2 252 277

## Description

L'invention concerne le domaine de la manutention des conteneurs normalisés utilisés pour le transport de marchandises diverses et ayant une hauteur et une largeur de l'ordre de 2,4 m et une longueur de l'ordre de 6 m ou de 12 m.

Si la manutention dans les zones de transbordement ne pose pas de problème particulier, car elle est assurée par des chariots appropriés en forme de portique pouvant chevaucher un conteneur et le soulever, par exemple, pour le déposer sur un autre conteneur, leur manutention dans les zones non équipées est beaucoup plus difficile car elle nécessite le recours à un engin de levage, tel qu'une grue, dont le coût horaire de location est élevé.

Il en est ainsi pour le déchargement et le chargement d'un véhicule affecté au transport de tels conteneurs, pour le déplacement d'un conteneur sur une aire de service, par exemple entre une zone de déchargement, une zone d'attente, et une zone de chargement, et, plus simplement, pour superposer un conteneur sur un autre conteneur.

Pour remédier à cela, il a déjà été envisagé de réaliser des dispositifs de manutention composés de béquilles verticales se fixant sur les faces en bout d'un conteneur, et comportant des moyens de levage mécaniques, tels que câbles, poulies à câble, rochet et manivelle. La fixation de ces moyens sur le conteneur, la mise en place de moyens de stabilisation entre béquilles et la manipulation des moyens de levage mécanique, conduit à une manutention longue et exigeant un personnel important.

On connaît également par WO 88/04276 un dispositif de levage comportant quatre ensembles munis chacun d'un piètement avec des moyens de roulement, d'une structure mobile verticalement par rapport au piètement grâce à un vérin hydraulique alimenté par une structure électrohydraulique contrôlée par une armoire de commande indépendante, et de moyens de liaison coopérant avec les coins, respectivement supérieur et inférieur, du montant d'angle correspondant du conteneur.

Les moyens de roulement de chaque ensemble étant disposés à mi-longueur de la structure mobile, et chaque ensemble étant utilisé verticalement, son redressement vertical à proximité du montant correspondant du conteneur nécessite, soit plusieurs hommes, soit des moyens de levage. Par ailleurs, le positionnement des moyens de liaison supérieurs nécessite une intervention humaine, allongeant le temps de préparation et dangereuse, car effectuée à 4 mètres du sol lorsque le conteneur est sur la plate-forme d'un camion.

On connaît également par FR-A-2252277 un dispositif de manutention comprenant quatre ensembles indépendants composés chacun d'un chariot portant un vérin hydraulique vertical alimenté par une pompe manuelle, et d'une structure de support dotée de moyen de liaison avec le coin inférieur du montant correspondant du conteneur.

La mise en place de ce dispositif contre le conteneur, de même que sa mise en oeuvre, nécessitent d'avoir recours à plusieurs personnes et entraînent des frais de fonctionnement élevés. Par ailleurs, en raison de sa structure, ce dispositif a une course de levage réduite qui limite son application aux manoeuvrés d'un conteneur entre la plate-forme d'un véhicule et un quai sensiblement au niveau de cette plate-forme.

La présente invention a pour but de remédier à ces inconvénients en fournissant un dispositif de manutention pour conteneur et autres caissons comportant des coins normalisés, qui soit autonome, de mise en oeuvre simple et rapide, ne nécessitant qu'un seul homme, tout en étant moins onéreux, à l'achat et en fonctionnement, que les moyens actuels.

A cet effet, chaque ensemble de levage est conçu de façon telle que décrite dans la partie caractérisante de la revendication 1.

Chaque ensemble peut être facilement déplacé par un seul homme, pour venir au voisinage de l'un des angles du conteneur et dans le plan médian de cet angle. Dans cette position, son équerre horizontale inférieure peut très facilement être positionnée contre le coin inférieur du conteneur par son tenon de positionnement lié à ce coin. On notera que le positionnement de l'équerre inférieure contre le coin amène l'équerre supérieure contre le montant du conteneur, de sorte que le positionnement de l'ensemble s'effectue aisément, dans un temps réduit, et sans avoir à monter sur le conteneur.

Lorsque tous les ensembles sont positionnés et liés aux coins inférieurs du conteneur, leurs groupes électro-hydrauliques sont connectés au poste d'alimentation à partir duquel un seul opérateur peut commander la mise en route de ces groupes électro-hydrauliques et l'alimentation des vérins provoquant le déplacement vertical des étriers par rapport au piètement de chaque ensemble.

Grâce à la liaison de chaque étrier avec le coin inférieur du conteneur, chaque ensemble est lié rigidement à ce conteneur et n'a donc pas besoin de moyens complémentaires de rigidification. Cela réduit le coût du dispositif et réduit le temps de son montage sur un conteneur.

Dans une forme d'exécution de l'invention, les moyens de liaison de chaque ensemble avec l'un des coins du conteneur comprennent. en saillie de la face interne de l'aile de l'équerre inférieure ne portant pas le tenon fixe, un tenon mobile qui, comportant une extrémité en "T", apte à prendre appui contre la face interne du coin, après avoir traversé l'ouverture oblongue de celui-ci, est monté coulissant dans un fourreau et coopère, par une partie filetée, avec une bague filetée, montée libre en rotation dans le fourreau mais calée en translation par rapport à celui-ci.

Dès que l'équerre est plaquée contre le dièdre formé par le coin. la bague filetée est actionnée de manière à déplacer longitudinalement le tenon mobile jusqu'à ce que son extrémité en "T" vienne en contact avec la face interne du coin et forme mâchoire de serrage, complémentaire à la mâchoire formée par l'aile de l'équerre. Ce moyen de fixation. simple et efficace, est très facile à mettre en oeuvre, aussi bien dans le sens du serrage que dans le sens du déserrage.

Avantageusement, le poste d'alimentation et de commande est porté par un châssis, comportant quatre montants verticaux et dont la base est équipée de coins pour conteneurs, les montants et les coins étant aptes à coopérer avec les équerres des quatre ensembles de levage pour former un ensemble monolithique stockable et transportable.

Cet agencement facilite les déplacements et le stockage du dispositif mais aussi sa mise en oeuvre par un seul homme, puisque chaque élément de levage conserve toujours une position verticale et ne nécessite pas des efforts importants pour être désolidarisé du châssis et déplacé.

D'autres caractéristiques et avantages ressortiront de la description qui suit en référence au dessin schématique annexé, représentant à titre d'exemple non limitatif, une forme d'exécution du dispositif selon l'invention.
Figure 1 est une vue en perspective de l'un des ensembles composant ce dispositif,
Figure 2 est une vue partielle en perspective montrant. à échelle agrandie, la partie inférieure d'un ensemble lors de sa mise en place contre le coin inférieur d'un conteneur,
Figure 3 est une vue de côté en élévation montrant, à échelle réduite, un ensemble lorsqu'il est plaqué contre l'un des angles d'un conteneur,
Figure 4 est une vue en perspective montrant l'ensemble du dispositif, lorsqu'il est en position de levage d'un conteneur,
Figure 5 est une vue de côté en élévation montrant le dispositif lorsqu'il est en position de rangement et est associé à un châssis portant le poste d'alimentation,
Figure 6 est une vue en plan par dessus du dispositif de figure 5,
Figures 7 et 8 sont des vues en élévation, respectivement de côté et par l'arrière, montrant l'intégration du dispositif selon l'invention au tracteur d'un ensemble routier pour le transport d'un conteneur.

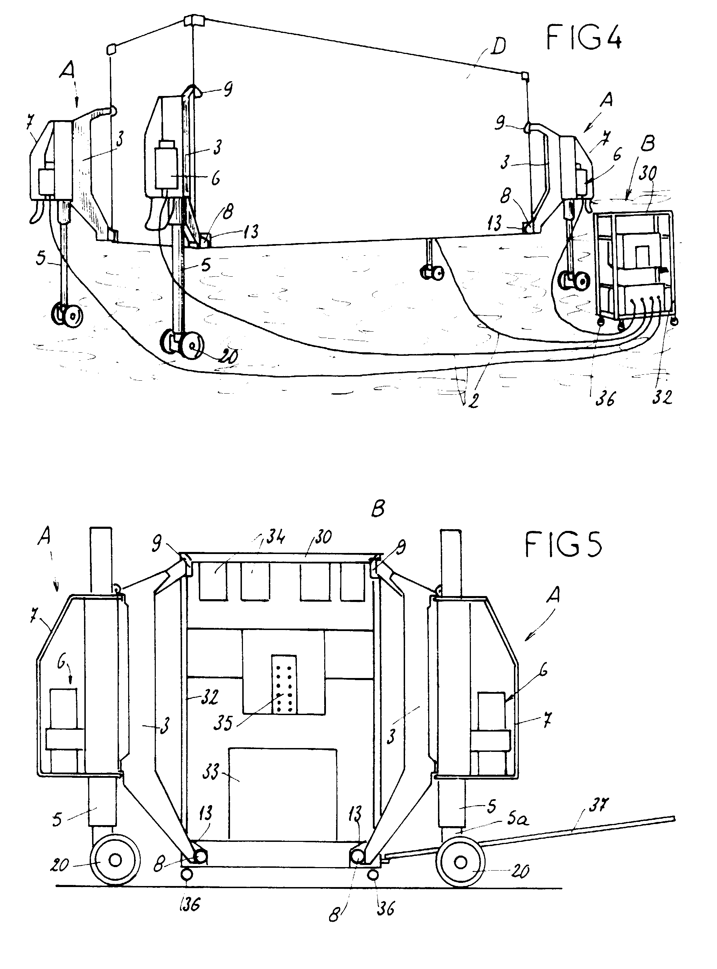

Comme montré à la figure 4, le dispositif selon l'invention est composé de quatre ensembles de levage, désignés par la référence A. Chaque ensemble est raccordé par un câble électrique 2 à un poste d'alimentation commun B.

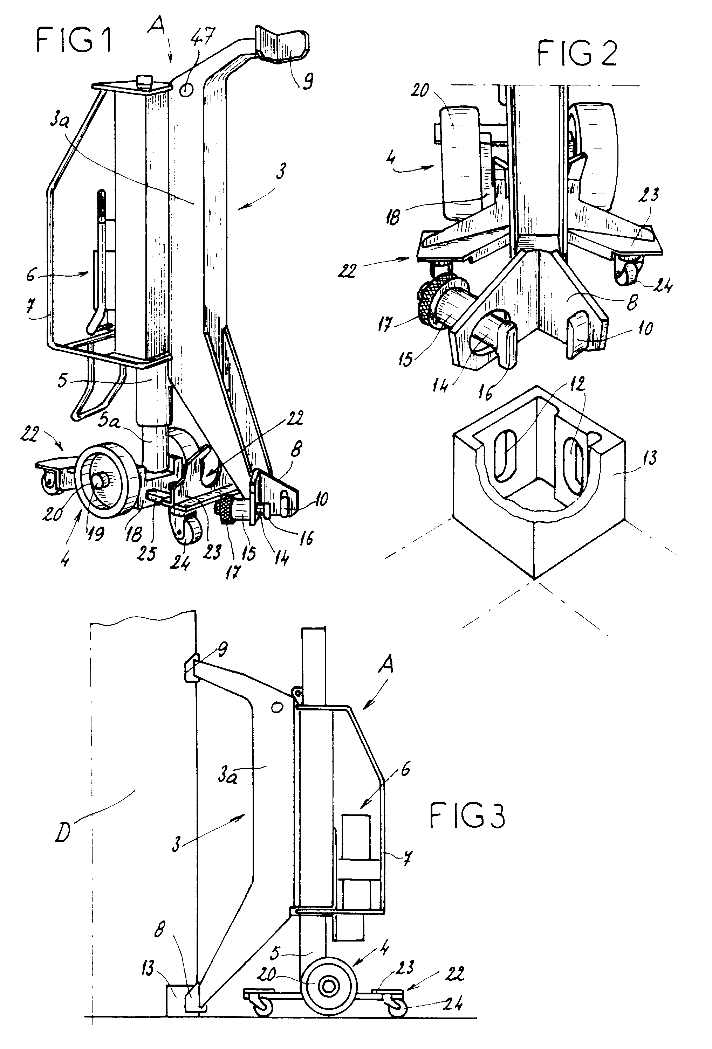

Chaque ensemble de levage A est composé, comme montré aux figures 1 à 3, d'un étrier 3, en forme de "C" vertical et de hauteur inférieure à celle du montant d'un conteneur, d'un piètement roulant 4, d'un vérin hydraulique 5, interposé entre le piètement 4 et l'étrier 3 et d'un groupe électro-hydraulique 6, porté par un bâti 7 solidaire de l'âme 3a de l'étrier 3.

Chacune des extrémités de l'étrier 3 est équipée d'une équerre horizontale, respectivement inférieure 8 et supérieure 9. Comme le montre plus en détails la figure 2, l'équerre inférieure comporte, en saillie de la face interne de l'une de ses ailes, un tenon fixe de positionnement 10 apte à pénétrer dans l'une des ouvertures oblongues 12 de l'un des coins 13 ménagés à la partie inférieure de chaque conteneur et dans l'alignement des montants d'angle. L'autre aile de la même équerre porte un moyen de liaison avec l'autre lumière oblongue 12 du même coin 13.

Dans la forme d'exécution représentée, ce moyen de liaison est composé d'un tenon 14, mobile axialement dans un fourreau 15 solidaire de l'équerre 8. L'extrémité libre du tenon 14 est munie d'une barre transversale 16 lui donnant la forme d'un "T", tandis que son autre extrémité est filetée et coopère avec une bague 17, montée libre en rotation par rapport au fourreau 15, et calée en translation par rapport à ce dernier.

Le piètement roulant 4 est composé d'un support en "U" 18 dont l'âme est liée à l'un des éléments du vérin hydraulique 5 et dont les ailes verticales sont chacune munie d'un pivot horizontal 19 pour une roue 20.

Dans la forme d'exécution représentée, le support en "U" 18 est lié à la tige télescopique Sa du vérin 5, dont le corps est fixé au dos de l'âme 3a de l'étrier. Cette liaison permet au support 18 du piètement de pivoter autour d'un axe vertical.

Pour assurer la stabilisation de chaque ensemble, lorsqu'il n'est pas lié à un conteneur, chaque piètement roulant est associé à au moins un, et bien souvent à deux diables amovibles 22. Chaque diable est composé d'un châssis 23 portant deux roulettes 24 orientables autour d'un axe vertical et deux barres d'attelage 25. Ces barres, parallèles et horizontales, sont aptes à pénétrer dans des fourreaux de fixation ménagés dans le support 18 du piètement roulant. En pratique, la fixation de chaque barre dans le fourreau correspondant est assurée par une vis transversale se vissant dans l'âme du support 18 et venant en contact avec la barre d'attelage correspondante par l'une de ses extrémités et comportant une tête de manoeuvre à son autre extrémité dépassant de l'âme.

Le groupe électro-hydraulique 6, porté par le châssis 7, comprend, de façon connue, un moteur électrique entraînant une pompe hydraulique débitant, à travers une électrovanne à trois positions dans l'une des deux branches d'un circuit hydraulique d'alimentation du corps du vérin 5. Le groupe hydraulique est autonome, c'est à dire que le châssis 7 porte le réservoir d'huile et les accessoires nécessaires au fonctionnement de ce groupe.

On notera que, grâce à cet agencement, chaque ensemble de levage est indépendant hydrauliquement des autres, et que sa seule liaison avec les autres ensembles s'effectue uniquement par des liaisons électriques 2 aboutissant au poste de commande B.

Dans la forme d'exécution représentée aux figures 1 à 6, le poste de commande B est porté par un châssis 30, de section transversale rectangulaire et dont les quatre montants verticaux 32 sont munis, à leur base, de coins normalisés 13, identiques à ceux disposés aux quatre angles inférieurs de chaque conteneur. Par ailleurs, la hauteur de ce châssis est au moins égale à la hauteur de l'étrier 3 de chaque ensemble, afin que chacun des ensembles puisse être relié à lui, par exemple pour être stocké.

Ce châssis porte un groupe électrogène 33 avec ses moyens de commande et de contrôle, mais aussi des moyens de stockage des liaisons électriques et notamment quatre bobines 34 pour chacun des quatre câbles 2 reliant ce poste de commande aux quatre ensembles. Il porte aussi un boîtier de commande 35 à boutons poussoirs permettant de commander, simultanément ou séparément, l'alimentation des vérins 5 des ensembles de levage A. Ce boîtier peut être du type traditionnel ou être constitué par une télécommande à haute fréquence ou infrarouge.

Le châssis 30 est avantageusement équipé de moyens, non représentés. permettant de porter les diables amovibles 22 lorsqu'ils ne sont pas eux-mêmes fixés sur le piètement roulant de chaque ensemble. Enfin, il est muni de roulettes 36 permettant de le déplacer au sol lorsqu'il n'est pas soulevé par les ensembles et d'un brancard amovible 37, permettant son déplacement par un tracteur.

La manutention d'un conteneur D au moyen de ce dispositif s'effectue de la façon suivante. Chaque ensemble, préalablement muni d'au moins un diable 22, est désolidarisé du châssis 30 du poste de commande B par actionnement du tenon 14 au moyen de la bague filetée 17. Il est amené à proximité de l'un des angles d'un conteneur. positionné de manière que son plan médian longitudinal contienne la bissectrice de l'angle du montant, puis est rapproché de cet angle jusqu'à ce que le tenon de positionnement 10 de son équerre inférieure 8 soit au voisinage de l'une des ouvertures oblongues 12 du coin inférieur 13 correspondant. A ce stade, il est déplacé de manière que son équerre 8 coiffe l'angle externe du coin 13 et vienne en contact avec ce coin, tandis que l'équerre 9 vient en contact avec le montant disposé dans le prolongement vertical de ce coin, comme montré à la figure 3. Pour lier définitivement l'ensemble avec le conteneur, il suffit d'engager la partie en forme de "T" 16 du tenon mobile 14 dans l'autre lumière 12 et d'actionner la bague 17, de manière à pincer la paroi de ce coin entre l'extrémité 16 et l'aile correspondante de l'équerre 8.

Lorsque tous les ensembles sont solidarisés de l'un des angles du conteneur, ils sont débarrassés de leurs diables amovibles 22 et sont raccordés par les câbles 2 au poste de contrôle et de commande B.

On notera que ces différentes opérations peuvent être effectuées par un seul homme et dans un temps bien inférieur à celui nécessaire avec les dispositifs connus.

A ce stade, pour soulever le conteneur, il suffit, après avoir mis en fonctionnement les groupes électro-hydrauliques 6 de chaque ensemble de levage A, d'actionner les boutons du boîtier de commande 35 pour initier les mouvements des vérins 5, en actionnant leur électrovanne de distribution.

La course de levage peut ainsi être réglée à volonté en fonction des besoins. En pratique, chacun des vérins 5 est choisi pour pouvoir lever un conteneur D, posé au sol, d'une valeur égale à la distance par rapport au sol du plateau d'un véhicule, majorée d'un jeu, c'est à dire est de l'ordre de 1,7 mètre, de manière à permettre le dépôt de ce conteneur sur ce plateau, ou sur un support quelconque.

La figure 4 montre qu'un conteneur soulevé par le dispositif peut aisément être déplacé et tracté grâce aux roues 20 équipant chaque ensemble A.

A la fin des opérations de manutention du conteneur et lorsque celui-ci est posé, les diables amovibles 22 sont remis en place sur les piètements 4, les étriers 3 sont désolidarisés du conteneur D et ramenés à leur position initiale inférieure.

Ce dispositif de manutention permet, pour un coût plusieurs fois inférieurs à celui d'un chariot de manutention de conteneurs, de déplacer verticalement et horizontalement tout conteneur équipé de coins normalisés. Lorsqu'il est en position de rangement, il forme un ensemble pouvant être aisément transporté, ce qui permet de l'amener sur des chantiers, sur des aires de déchargement, sur des aires de stockage. La mise en oeuvre est simple et rapide et ne nécessite aucune formation particulière, comme d'ailleurs sa commande et son contrôle. De ce fait, ce dispositif peut être mis en oeuvre par un personnel non spécialisé, sans aucun risque pour le personnel et pour les objets transportés.

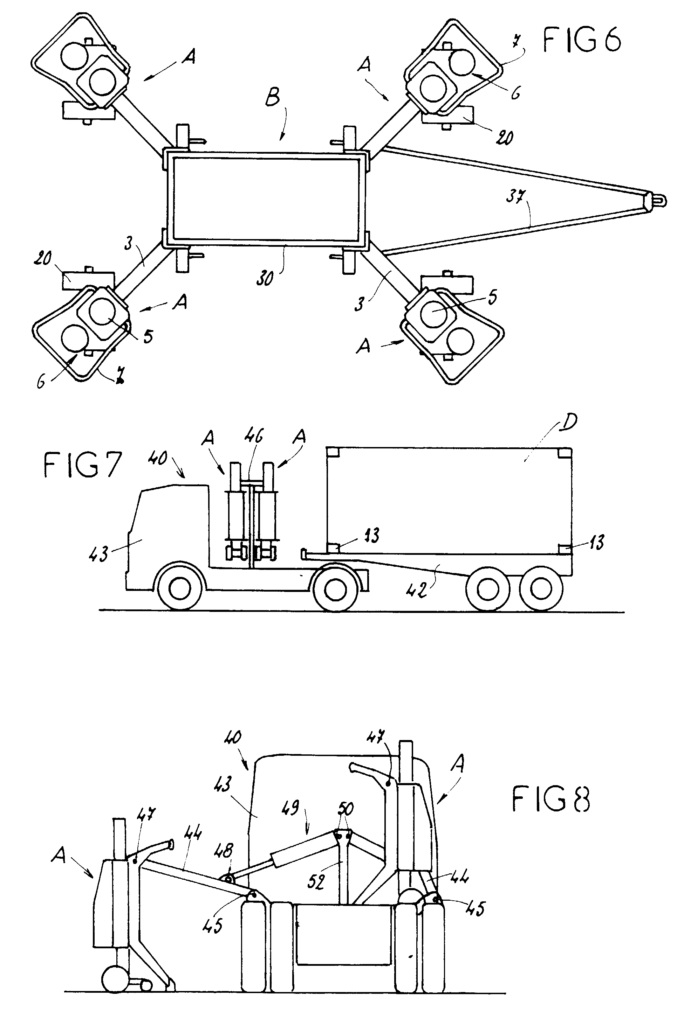

Les figures 7 à 8 montrent que le dispositif, selon l'invention, peut être intégré au tracteur 40 d'un ensemble routier dont la semi remorque 42 est utilisée pour le transport de conteneurs D. Dans ces conditions, le poste d'alimentation et de commande est intégré au tracteur 40 et les ensembles de levage A sont disposés latéralement et par paires derrière la cabine 43 du tracteur 40.

Dans la forme d'exécution représentée, chaque paire d'ensemble de levage A est associée à un bras de manipulation 44 apte à l'amener d'une position de stockage derrière la cabine et le tracteur, comme montré sur la partie droite de la figure 8, à une position de travail montrée sur la partie gauche de la même figure, dans laquelle il est en appui sur le sol et disposé latéralement d'un côté de l'ensemble routier.

Chaque bras de manipulation 44 est articulé par l'une de ses extrémités autour d'un axe horizontal 45, tourillonnant dans une chape du châssis du tracteur. Son autre extrémité est solidaire d'un longeron 46, visible figure 7, dont chacune des extrémités est articulée au moyen d'une articulation 47 sur la partie supérieure de l'étrier de chacun des deux ensembles juxtaposés. Chaque bras 44 est attelé par une articulation horizontale 48, à l'un des éléments d'un vérin hydraulique 49, dont l'autre élément est articulé en 50 sur un support 52 du châssis.

Dans cette application lorsque le véhicule arrive à destination, son conducteur peut très aisément commander par le vérin hydraulique 49 le dépôt sur le sol des ensembles de levage posés derrière le tracteur, puis, après avoir désolidarisé chaque ensemble A du bras de manipulation 44 le portant, amener chaque ensemble à proximité des angles du conteneur C, porté par le véhicule. Après raccordement des liaisons électriques entre chaque ensemble et le poste de commande porté par le tracteur, le même opérateur actionne l'élévation des étriers, les positionne et les fixe sur les coins, puis commande le soulèvement du conteneur par rapport à la plate-forme de la remorque 42. Dès que le conteneur est soulevé d'une quantité suffisante, il suffit de déplacer l'ensemble routier pour permettre de poser le conteneur sur le sol, à moins qu'il ait été amené au dessus d'un support approprié en mettant à profit les roues 20 du piètement roulant 4 équipant chaque ensemble.

Bien entendu, en fin de manutention, chaque ensemble est ramené à proximité de son bras de manutention pour pouvoir être amené en position de stockage à l'arrière du tracteur.

On notera que, dans cette application, le dispositif selon l'invention assiste le conducteur et, en réduisant le temps d'occupation de la remorque par un conteneur, permet de libérer plus rapidement l'ensemble routier qui peut ainsi effectuer un plus grand nombre de transports journaliers.

## Revendications

1. Dispositif pour la manutention d'un conteneur ou autre caisson (D) muni de coins normalisés, comprenant, d'une part, quatre ensembles de levage (A) composés chacun, d'un piètement (7) avec des moyens de roulement (20), d'un vérin hydraulique (5) interposé entre le piètement (4) et le bâti (7) d'une structure de levage munie de moyens de liaison (14, 15, 16, 17) avec le coin inférieur du conteneur (D), caractérisé en ce qu'un groupe électrohydraulique (6) est porté par le bâti (7) et que dans chaque ensemble de levage, la structure de levage est constituée par un étrier (3), en forme de "C" dans le plan vertical et de hauteur inférieure à celle du conteneur, cet étrier (3) présentant, à son extrémité inférieure, une équerre horizontale (8) apte à coiffer l'angle extérieur du coin (13) inférieur d'un conteneur (D) et, à son extrémité supérieure, une équerre horizontale (9) apte à coiffer le montant d'angle du conteneur (D), tandis que les moyens de liaison (14, 15, 16, 17) avec le coin inférieur du conteneur (D) sont portés par l'une des ailes de l'équerre inférieure (8), dont l'autre aile porte, en saillie de sa face interne, un tenon fixe (10) de positionnement, apte à traverser l'ouverture (12) ménagée dans un coin (13) du conteneur (D) et à prendre appui sur le bord supérieur de cette ouverture (12), la mise en place de chaque ensemble s'effectuant en mettant le plan médian longitudinal de cet ensemble dans le plan vertical contenant la bissectrice de l'angle vertical correspondant du conteneur (D) et en rapprochant les équerres (8, 9) contre cet angle, et que le dispositif comprend d'autre part, un poste d'alimentation électrique (B) et de commande commun aux quatre ensembles et reliable à chacun d'eux par un câble électrique (2).

2. Dispositif selon la revendication 1, caractérisé en ce que l'équerre inférieure (8) de chaque ensemble de levage (A) comprend, en saillie de l'une de ses faces internes, un tenon fixe (10) apte à traverser l'ouverture (12) ménagée dans un coin (13) du conteneur et à prendre appui sur le bord supérieur de cette ouverture, et, en saillie de son autre face interne, un tenon mobile (14) qui, comportant une extrémité en "T" (16), apte à prendre appui contre la face interne du coin (13), après avoir traversé l'ouverture oblongue de celui-ci, est monté coulissant dans un fourreau (15) et coopère, par une partie filetée (17), avec une bague filetée, montée libre en rotation dans le fourreau (15) mais calée en translation par rapport à celui-ci.

3. Dispositif selon l'une quelconque des revendications 1 et 2, caractérisé en ce que le piètement roulant (5) est monté libre en rotation autour de l'axe vertical du vérin (5), porte deux pivots (19) horizontaux pour deux roues (20), et des moyens de fixation pour les barres d'attelage (25) d'au moins un diable amovible (22) assurant la stabilisation de l'ensemble de levage (A), lorsqu'il n'est pas attelé au conteneur.

4. Dispositif selon la revendication 3, caractérisé en ce que chaque diable (22) est composé d'un châssis (23) portant deux roulettes (24), et deux barres d'attelage (25), horizontales et parallèles, aptes à pénétrer dans des fourreaux de fixation ménagés dans chaque piètement (5).

5. Dispositif selon l'une quelconque des revendications 1 à 4, **caractérisé en ce que** le poste d'alimentation et de commande (B) est porté par un châssis (30), comportant quatre montants verticaux (32) et dont la base est équipée de coins (13) pour conteneurs, les montants et les coins étant aptes à coopérer avec les équerres (8, 9) des quatre ensembles de levage (A) pour former un ensemble monolithique stockable et transportable..

6. Dispositif selon la revendication 5, **caractérisé en ce que** le châssis (30) du poste d'alimentation et de commande (B) porte un groupe électrogène (33), avec ses moyens de commande et de contrôle, des moyens de stockage (34) pour quatre câbles (2) d'alimentation allant aux quatre ensembles de levage (1), et un boîtier (35) de commande des quatre vérins hydrauliques (5).

7. Dispositif selon l'une quelconque des revendications 1 à 4, **caractérisé en ce que** le poste d'alimentation et de commande (B) est installé sur le tracteur d'un ensemble routier portant également deux bras opposés (44) de manipulation d'une paire d'ensembles de levage (A), entre une position de stockage dans laquelle chaque paire de l'ensemble est posé derrière la cabine du tracteur, et une position de travail, dans laquelle chaque paire d'ensembles de levage est posé sur le sol, latéralement d'un côté de l'ensemble routier.

8. Dispositif selon la revendication 7, **caractérisé en ce que** chaque bras de manipulation (44) est articulé par l'une de ses extrémités sur le châssis du tracteur, comporte à son autre extrémité, un longeron (46) dont les extrémités sont liées avec articulation aux étriers (3) des deux ensembles de levage (A) juxtaposés, et est associé à des moyens hydrauliques (49) aptes à le faire pivoter entre ses deux positions extrêmes.

## Patentansprüche

1. Vorrichtung für die Beförderung eines Containers oder eines anderen Behälters (D), der mit genormten Ecken ausgestattet ist, umfassend einerseits vier Hubeinheiten (A), die jeweils gebildet sind von einem Gestell (7) mit Rollmitteln (20) und von einem hydraulischen Stellgerät (5), welches zwischen das Gestell (4) und das Traggestell (7) eines Hubaufbaus eingefügt ist, welcher mit Mitteln (14, 15, 16, 17) zur Verbindung mit der unteren Ecke des Containers (D) ausgestattet ist, dadurch gekennzeichnet, daß ein elektrohydraulisches Aggregat (6) durch das Traggestell (7) getragen ist, und daß in jeder Hubeinheit der Hubaufbau durch einen Bügel (3) gebildet ist, der in der vertikalen Ebene "C"-förmig ist und eine Höhe besitzt, die kleiner als diejenige des Containers ist, wobei dieser Bügel (3) an seinem unteren Ende ein horizontales Winkelteil (8) aufweist, das dazu geeignet ist, den äußeren Winkel der unteren Ecke (13) eines Containers (D) zu greifen, und an seinem oberen Ende ein horizontales Winkelteil (9) aufweist, das dazu geeignet ist, den Eckpfosten des Containers (D) zu greifen, während die Mittel (14, 15, 16, 17) zur Verbindung mit der unteren Ecke des Containers (D) durch einen der Schenkel des unteren Winkelteils (8) getragen sind, dessen anderer Schenkel - von seiner inneren Fläche vorstehend - einen festen Positionierungszapfen (10) trägt, der dazu geeignet ist, durch die in einer Ecke (13) des Containers (D) ausgebildete Öffnung (12) durchzutreten und an dem oberen Rand dieser Öffnung (12) zur Anlage zu kommen, wobei das Aufstellen jeder Einheit durchgeführt wird, indem die Längsmittelebene dieser Einheit in diejenige vertikale Ebene gebracht wird, die die Halbierende des entsprechenden vertikalen Winkels des Containers (D) enthält, und indem die Winkelteile (8, 9) an diesen Winkel angenähert werden, und daß die Vorrichtung andererseits eine den vier Einheiten gemeinsame Station (B) zur elektrischen Versorgung und Steuerung umfaßt, die mit jeder der Einheiten durch ein elektrisches Kabel (2) verbindbar ist.

2. Vorrichtung nach Anspruch 1, dadurch gekennzeichnet, daß das untere Winkelteil (8) jeder Hubeinheit (A) - von einer seiner inneren Flächen abstehend - einen festen Zapfen (10) umfaßt, der dazu geeignet ist, die in einer Ecke (13) des Containers ausgebildete Öffnung (12) zu durchsetzen und an dem oberen Rand dieser Öffnung zur Anlage zu kommen, und - von seiner anderen inneren Fläche abstehend - einen bewegbaren Zapfen (14) umfaßt, der ein "T"-förmiges Ende (16) aufweist und dazu geeignet ist, gegen die innere Fläche der Ecke (13) zur Anlage zu kommen, nachdem er die längliche Öffnung derselben durchsetzt hat, und der in einer Hülse (15) verschiebbar angebracht ist und durch einen mit Gewinde versehenen Teil (17) mit einem mit Gewinde versehenen Ring zusammenwirkt, der in der Hülse (15) drehbar angebracht ist, jedoch hinsichtlich einer Translation relativ zu dieser blockiert ist.

3. Vorrichtung nach einem der Ansprüche 1 und 2, dadurch gekennzeichnet, daß das Rollgestell (5) um die vertikale Achse des Stellgeräts (5) drehbar angebracht ist und zwei horizontale Drehzapfen (19) für zwei Räder (20) und Befestigungsmittel für die Kupplungsstangen (25) von wenigstens einer lösbaren Karre (22) trägt, welche die Stabilisierung der Hubeinheit (A) gewährleistet, wenn sie nicht an den Container gekoppelt ist.

4. Vorrichtung nach Anspruch 3, dadurch gekennzeichnet, daß jede Karre (22) von einem Chassis (23) gebildet ist, welches zwei Rollen (24) und zwei horizontale und parallele Kupplungsstangen (25) trägt, welche dazu geeignet sind, in Befestigungshülsen einzudringen, die in jedem Gestell (5) angelegt sind.

5. Vorrichtung nach einem der Ansprüche 1 bis 4, dadurch gekennzeichnet, daß die Station (B) zur Versorgung und zur Steuerung durch ein Chassis (30) getragen ist, welches vier vertikale Ausstrebungen (32) umfaßt und dessen Basis mit Ecken (13) für Container ausgestattet ist, wobei die Ausstrebungen und die Ecken dazu geeignet sind, mit den Winkelteilen (8, 9) der vier Hubeinheiten (A) zusammenzuwirken, um eine monolithische, lagerbare und transportable Einheit zu bilden.

6. Vorrichtung nach Anspruch 5, dadurch gekennzeichnet, daß das Chassis (30) der Station (B) zur Versorgung und zur Steuerung ein stromerzeugendes Aggregat (33) mit dessen Steuer- und Kontrollmitteln, Mittel (34) zur Lagerung für vier, zu den vier Hubeinheiten (1) gehenden Versorgungskabeln (2) sowie einen Kasten (35) zur Steuerung der vier hydraulischen Stellgeräte (5) trägt.

7. Vorrichtung nach einem der Ansprüche 1 bis 4, dadurch gekennzeichnet, daß die Station (B) zur Versorgung und zur Steuerung auf der Zugmaschine einer Lastfahrzeugeinheit installiert ist, die auch zwei entgegengesetzte Arme (44) zur Manipulation eines Paars von Hubeinheiten (A) zwischen einer Lagerungsposition, in welcher jedes Paar von Einheiten hinter der Kabine der Zugmaschine angeordnet ist, und einer Arbeitsposition trägt, in welcher jedes Paar von Hubeinheiten auf dem Boden abgestellt ist, und zwar seitlich einer Seite der Lastfahrzeugeinheit.

8. Vorrichtung nach Anspruch 7, dadurch gekennzeichnet, daß jeder Manipulationsarm (44) durch eines seiner Enden an dem Chassis der Zugmaschine gelenkig angebracht ist, an seinem anderen Ende einen Längsträger (46) aufweist, dessen Enden gelenkig mit den Bügeln (3) der beiden einander benachbarten Hubeinheiten (A) verbunden sind, und mit Hydraulikmitteln (49) verbunden ist, die dazu geeignet sind, ihn zwischen seinen beiden Endstellungen zu verschwenken.

## Claims

1. A device for handling a container or other box (D) provided with standardised corners, including, on the one hand, four lifting assemblies (A) each comprising a lower frame (4) with rolling means (20), a hydraulic jack (5) interposed between the lower frame (4) and the frame (7) of a lifting structure provided with means (13, 14, 15, 16, 17) for connection with the lower corner of the container (D), characterised in that an electro-hydraulic unit (6) is carried by the frame (7) and in that in each lifting assembly, the lifting structure is constituted by a stirrup (3), in the form of a "C" in the vertical plane, and of a height less than that of the container, this stirrup (3) having, at its lower end, a horizontal angle bracket (8) adapted to cover the external angle of the lower corner (13) of a container (D) and, at its upper end, a horizontal angle bracket (9) adapted to cover the rising angle of the container (D), whilst the means (13,14,15,16,17) for connection with the lower corner of the container (D) are carried by one of the arms of the lower angle bracket (8), of which the other arm carries, projecting from its internal face, a fixed positioning lug (10), adapted to pass through the opening (12) formed in one corner (13) of the container (D) and to bear on the upper edge of this opening (12), the positioning of each assembly being effected by placing the longitudinal median plane of this assembly into the vertical plane containing the bisector of the corresponding vertical angle of the container (D) and bringing the brackets (8, 9) towards and against this angle, and in that the device includes, on the other hand, an electrical supply and control station common to the four assemblies and which can be connected to each of them by an electric cable.

2. A device according to Claim 1, characterised in that the lower angle bracket (8) of each lifting assembly (A) includes, projecting from one of its internal faces, a fixed lug (10) adapted to pass through the opening (12) formed in one corner (13) of the container and to bear on the upper edge of this opening, and, projecting from its other internal face, a movable lug (14) which, having one "T" shaped end (16), adapted to bear against the internal face of the corner (13), after having passed through the oblong opening in the latter, is slidably mounted in a sleeve (15) and cooperates, through a threaded portion (17), with a threaded ring freely rotationally mounted in the sleeve (15) but locked in translation relative to it.

3. A device according to any one of claims 1 and 2, characterised in that the rolling lower frame (4) is mounted free for rotation about the vertical axis of the jack (5), carries two horizontal pivots (19) for two wheels (20), and fixing means for the attachment bars (25) of at least one removable trolley (22) ensuring the stability of the lifting assembly (A), when it is not attached to the container.

4. A device according to Claim 3, characterised in that each trolley (22) comprises a chassis (23) carrying two castors (23), and two horizontal and parallel attachment bars (25), adapted to extend within the fixing sleeves formed in each lower frame (4).

5. A device according to any one of claims 1 to 4, characterised in that the supply and control station (B) is carried by a chassis (30), having four vertical uprights (32) and of which the base is equipped with corners (13) for containers, the uprights and the corners being adapted to cooperate with the angle brackets (8,9) of the four lifting assemblies (A) to form a monolithic storable and transportable assembly.

6. A device according to claim 5, characterised in that the chassis (30) of the supply and control station (B) carries a generating set (33), with its command and control means, storage means (34) for four supply cables (2) going to the four lifting assemblies (1), and a control housing (35) for the four hydraulic jacks (5).

7. A device according to any one of claims 1 to 4, characterised in that the supply and control station (B) is installed on the tractor of a road-going assembly also carrying two opposing arms (44) for handling a pair of lifting assemblies (A), between a storage position in which each pair of the assembly is placed behind the tractor cabin, and a working position in which each pair of lifting assemblies is placed on the ground, laterally of one side of the road-going assembly.

8. A device according to claim 7, characterised in that each handling arm (44) is articulated by one of its ends on the chassis of the tractor, has at its other end a side-member (46) of which the ends are connected with articulation to the stirrups (3) of the two juxtaposed lifting assemblies (A), and is associated with hydraulic means (49) adapted to cause it to pivot between its two extreme positions.
